# EUROPÄISCHE PATENTSCHRIFT

(11) **EP 2 189 836 B1**
(45) Veröffentlichungstag und Bekanntmachung des Hinweises auf die Patenterteilung: **07.09.2011**
(21) Anmeldenummer: 09450203.6
(22) Anmeldetag: 28.10.2009
(51) Int. Cl.: G02C 5/22

(54) **Federscharnier zwischen einem Bügelbacken und einem Bügel einer Brille**
Spring hinge between a temple and frame of spectacles
Charnière à ressort entre un tenon et un cintre de lunettes

(30) Priorität: 21.11.2008 AT 18192008
(43) Veröffentlichungstag der Anmeldung: 26.05.2010
(73) Patentinhaber: Redtenbacher Präzisionsteile Ges. M.B.H., 4644 Scharnstein (AT)
(72) Erfinder: Sprickler, Martin, 4801 Traunkirchen (AT)
(74) Vertreter: Hübscher, Helmut

(56) Entgegenhaltungen:
- EP-A- 0 632 306
- EP-A- 1 335 236
- EP-A- 1 617 276
- EP-A- 1 821 132
- WO-A-2005/111701

## Beschreibung

Die Erfindung bezieht sich auf ein Federscharnier zwischen einem Bügelbacken und einem Bügel einer Brille mit zwei je einem dieser Brillenteile zugehörigen Scharnierteilen, von denen einer eine Lagergabel mit einer Scharnierachse zur Aufnahme des anderen Scharnierteils formt, der mit Hilfe eines Gleitstücks in einem Gehäuse verschiebbar geführt ist, und mit einer zwischen zwei Schenkeln des Gleitstücks angeordneten Schraubenfeder, die sich einerseits an einem die beiden Schenkel verbindenden Steg des Gleitstücks und anderseits an einem gehäusefesten Widerlager abstützt.

Zur Sicherstellung einfacher Montagebedingungen ist es bei Federscharnieren bekannt (AT 502 196 B1), den bügelseitigen Scharnierteil mit einem in eine Gehäuseausnehmung eingreifenden, U-förmigen Gleitstück zu versehen, das zwischen seinen beiden Schenkeln eine Schraubenfeder aufnimmt, die sich einerseits am die beiden Schenkel des Gleitstücks verbindenden Steg und anderseits an einem Widerlager abstützt, das in ein zur Schraubenfeder koaxiales Muttergewinde des Gehäuses eingeschraubt wird, und zwar durch eine koaxiale Durchtrittsöffnung des bügelseitigen Scharnierteils. Eine solche Konstruktion stellt eine vorteilhafte Voraussetzung für ein in Umfangsrichtung geschlossenes Gehäuse dar, das ohne Schwierigkeiten von der Stirnseite her in einen Brillenbügel eingesetzt werden kann. Allerdings ist diese einfache Montagemöglichkeit mit einem vergrößerten Konstruktionsaufwand verbunden, weil für das Widerlager eine entsprechende Gewindebohrung im Gehäuse und im das Gleitstück bildenden Scharnierteil eine Durchtrittsöffnung vorzusehen sind, die den Einsatz des Widerlagers in die Gewindebohrung erlaubt.

Zur verdeckten Anordnung von Federscharnieren ist es bei Kunststoffbrillen außerdem bekannt (WO 2006/053983 A1), den eine Lagergabel formenden backenseitigen Scharnierteil in eine Aufnahmetasche des Bügelbackens einzusetzen und auch das den bügelseitigen, federbeaufschlagten Scharnierteil verschiebbar aufnehmende Gehäuse als vom Bügel umschlossenen Einsatz auszubilden, sodass die Scharnierteile im Wesentlichen nur über die Stirnseiten des Bügelbackens bzw. des Bügels vorstehen und bei geöffnetem Bügel nicht erkennbar sind, weil die Stirnseiten des Bügelbackens und des Bügels durch das Federscharnier flächig aneinandergedrückt werden. Es verbleibt lediglich eine für das Verschwenken des bügelseitigen Scharnierteils erforderliche Aussparung auf der Backeninnenseite. Nachteilig ist allerdings, dass die Scharnierachse durch eine Durchtrittsöffnung im Bügelbacken eingesetzt werden muss, was nicht nur Montageschwierigkeiten mit sich bringt, sondern auch die eingesetzte Scharnierachse von außen erkennen lässt.

Gemäß einem nicht vorveröffentlichten Stand der Technik wird in Weiterbildung des aus der AT 502 196 B1 bekannten Federscharniers vorgeschlagen, den backenseitigen Scharnierteil mit der die Scharnierachse aufnehmenden Lagergabel in einer seitlich geschlossenen Aufnahmetasche des Bügelbackens zu verankern, sodass die Scharnierachse nicht durch den Bügelbacken hindurch eingesetzt werden muss. Dies macht jedoch den nachträglichen Einsatz des bereits mit dem backenseitigen Scharnierteils gelenkig verbundenen, bügelseitigen Scharnierteils in das bügelseitige Gehäuse erforderlich, was nur möglich ist, wenn der Bügelbacken in der eingeschwenkten Stellung des Bügels einen zur Schraubenfeder koaxialen Durchtritt für das Widerlager freigibt, sodass das Widerlager für die Schraubenfeder in eine entsprechende Gewindebohrung im bügelseitigen Scharniergehäuse eingeschraubt werden kann.
Schließlich ist es bekannt (WO 2005/111701 A1), das einen Rahmen zur Aufnahme der Schraubenfeder bildende Gleitstück von hinten in ein bodenloses, kastenförmiges Gehäuse einzusetzen, sodass der Scharnierteil des Gleitstücks stirnseitig über das Gehäuse vorsteht. Nachteilig ist vor allem, dass das Gleitstück mit der eingesetzten Schraubenfeder entweder mittels eines durch das Auge des Scharnierteils geführten Sicherungsstiftes oder durch einen in das kastenförmige Gehäuse eingesetzten Boden im Gehäuse gehalten werden muss, um das Gehäuse in eine stirnseitige Aufnahmeausnehmung des Brillenbackens mit Hilfe von Ultraschall einschweißen zu können. Außerdem kann der Scharnierteil mit dem Gleitstück nach dem Einschweißen des kastenförmigen Gehäuses in den Brillenbacken nicht mehr ausgewechselt werden.

Der Erfindung liegt somit die Aufgabe zugrunde, ein Federscharnier zwischen einem Bügel und einem Bügelbacken der eingangs geschilderten Art so auszugestalten, dass der Konstruktionsaufwand für die stirnseitige Montage des federbeaufschlagten Scharnierteils vereinfacht wird und außerdem vorteilhafte Voraussetzungen für eine verdeckte Federscharnieranordnung geschaffen werden.

Die Erfindung löst die gestellte Aufgabe dadurch, dass das Gehäuse ein eine Aufnahmeöffnung des zugehörigen Brillenteils für das Gleitstück verschließendes Verschlussstück darstellt, das das Widerlager für die Schraubenfeder bildet und mit einem an der Stirnseite des zugehörigen Brillenteils anschraubbaren Anschlussflansch versehen ist.

Da zufolge dieser Maßnahmen das Gehäuse lediglich ein Verschlussstück einer Aufnahmeöffnung des zugehörigen Brillenteils für die Schraubenfeder darstellt ergeben sich besonders einfache Konstruktionsverhältnisse, weil eben ein die Schraubenfeder aufnehmendes Gehäuse entfällt. Das Widerlager für die Schraubenfeder wird durch dieses Verschlussstück gebildet, sodass es keines nachträglichen Einsetzens eines Widerlagers bedarf. Dies bedeutet allerdings, dass die Schraubenfeder nicht in axialer Richtung in das durch das Verschlussstück gebildete Gehäuse eingeführt werden kann. Dies ist auch nicht notwendig, weil bei einem Gleitstück, das die Schraubenfeder zwischen zwei Schenkeln aufnimmt und mit dem die beiden Schenkel miteinander verbindenden Steg eine Abstützung für die Schraubenfeder bildet, die Schraubenfeder vor dem Befestigen des Verschlussstückes am zugehörigen Brillenteil in das Gleitstück eingesetzt werden kann, nachdem das Gleitstück in das Verschlussstück eingeschoben wurde, sodass die Schraubenfeder auf der dem Scharnierteil abgewandten Seite des Verschlussstückes zwischen die Schenkel quer zur Federachse eingesetzt werden kann, wobei sich die Schraubenfeder einerseits am Steg des Gleitstücks und anderseits am Verschlussstück selbst abstützt. Das Verschlussstück mit dem eingesetzten, durch die Schraubenfeder beaufschlagten Gleitstück kann daher über seinen Anschlussflansch stirnseitig am zugehörigen Brillenteil befestigt werden, sodass durch die Lage des Anschlussflansches das Verschlussstück entsprechend positioniert wird.

Da das Verschlussstück mit dem darin über das Gleitstück verschiebbar gelagerten Scharnierteil mit einem geringen Montageaufwand stirnseitig am zugehörigen Brillenteil befestigt werden kann, ergeben sich vorteilhafte Voraussetzungen für die Ausbildung eines verdeckten Federscharniers, bei dem der eine Lagergabel zur Aufnahme des Scharnierteils mit dem Gleitstück bildende Scharnierteil in eine stirnseitig offene Aufnahmetasche des anderen Brillenteils eingesetzt wird, weil für die Schraubenfeder kein Widerlager nachträglich in das mit dem zugehörigen Brillenteil verbundene Gehäuse eingesetzt zu werden braucht. Dies bedeutet, dass zur Ausbildung des verdeckten Federscharniers entweder die Scharnierachse in an sich bekannter Weise durch den die Aufnahmetasche ausformenden Brillenteil hindurch in die Lagergabel des in die Aufnahmetasche eingesetzten Scharnierteils eingeführt oder der die Lagergabel bildende Scharnierteil nach dem Verbinden der beiden Scharnierteile durch die Scharnierachse in die seitlich geschlossene Aufnahmetasche eingesetzt werden kann.

Besonders einfache Konstruktionsverhältnisse ergeben sich, wenn das Gleitstück des federbeaufschlagten Scharnierteils einen die Schraubenfeder aufnehmenden Rahmen bildet, über dessen in Längsrichtung verlaufende Schenkel das Gleitstück im Verschlussstück verschiebbar geführt wird, weil sich in diesem Zusammenhang wegen des geschlossenen Rahmens eine sehr stabile Konstruktion ergibt.

In der Zeichnung ist der Erfindungsgegenstand beispielsweise dargestellt. Es zeigen
- Fig. 1: ein erfindungsgemäßes Federscharnier einer Brille in einem schemati- schen Längsschnitt und
- Fig. 2: dieses Federscharnier in einem Schnitt nach der Linie II-II.

Das dargestellte Federscharnier weist zwei je einem Brillenteil 1, 2, nämlich einem Bügel und einem Bügelbacken, zugehörige Scharnierteile 3, 4 auf, die mit Hilfe einer Scharnierachse 5 gelenkig miteinander verbunden sind. Der Scharnierteil 4 bildet dabei eine Lagergabel 6, in die der Scharnierteil 3 eingreift. Der üblicherweise bügelseitige Scharnierteil 3, der jedoch auch dem Bügelbacken zugeordnet sein kann, trägt ein Gleitstück 7, das in einem eine Aufnahmeöffnung 8 im zugehörigen Brillenteil 1 abschließenden Gehäuse 9 verschiebbar geführt ist. Dieses Gehäuse 9 bildet somit ein stirnseitiges Verschlussstück für die Aufnahmeöffnung 8, das mit einem Anschlussflansch 10 versehen ist, der mit Hilfe von Schrauben 11 stirnseitig mit dem Brillenteil 1 verbunden werden kann. Zwischen den in Längsrichtung verlaufenden Schenkeln 12 des Gleitstücks 7 ist eine Schraubenfeder 13 vorgesehen, die sich einerseits an einem die beiden Schenkel 12 miteinander verbindenden Steg 14 und anderseits am Gehäuse 9 abstützt, das somit als unmittelbares Widerlager für die Schraubenfeder 13 dient. Zur Halterung der Schraubenfeder 13 ist im Gehäuse 9 eine entsprechende Zentrierausnehmung 15 vorgesehen.

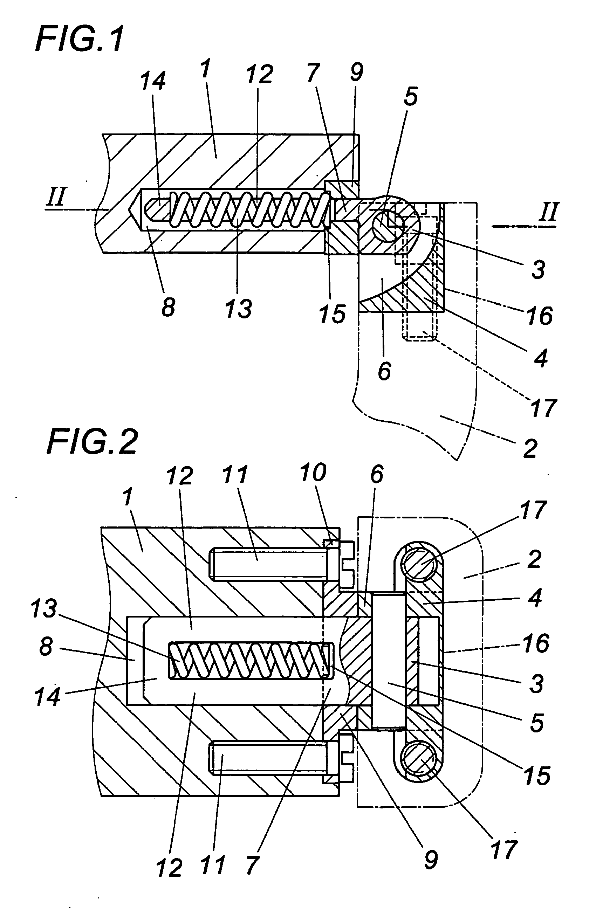

Der dem Brillenteil 2, üblicherweise ein Bügelbacken, zugehörige Scharnierteil 4 bildet einen in eine Aufnahmetasche 16 dieses Brillenteils 2 eingreifenden Einsatz, der in der Aufnahmetasche 16 vorzugsweise lösbar befestigt ist, was jedoch nicht zwingend ist. Zu diesem Zweck kann der Scharnierteil 4 mit Hilfe von Schrauben 17 am Brillenteil 2 festgeschraubt werden, wie dies insbesondere der Fig. 2 entnommen werden kann.

Um das Federscharnier zu montieren, wird zunächst das Gleitstück 7 des Scharnierteils 3 in das Gehäuse 9 eingeschoben und dann die Schraubenfeder 13 auf der dem Scharnierteil 3 abgewandten Seite des Gehäuses 9 in das Gleitstück 7 eingesetzt, indem die Schraubenfeder 13 quer zu ihrer Achse zwischen die Schenkel 12 des rahmenartigen Gleitstücks 7 eingesetzt wird, sodass sich ihre Enden unter Vorspannung einerseits am Steg 14 und anderseits am Gehäuse 9 abstützen, wobei zur Lagesicherung die Schraubenfeder 13 in der Zentrierausnehmung 15 des Gehäuses 9 gehalten wird. Das Gehäuse mit dem federbeaufschlagten Scharnierteil 3 kann dann am zugehörigen Brillenteil 1 stirnseitig festgeschraubt werden. Die gelenkige Verbindung zwischen den beiden Scharnierteilen 3 und 4 erfolgt nach dem Aufschieben der Lagergabel 6 des Scharnierteils 4 auf den Scharnierteil 3 mit Hilfe der durch die fluchtenden Lagerbohrungen dieser Scharnierteile 3, 4 eingeführten Scharnierachse 5. Der die Lagergabel 6 bildende Scharnierteil 3 kann dann in die seitlich geschlossene Aufnahmetasche 16 des Brillenteils 2 eingeführt werden, wobei die Seitenwangen der Aufnahmetasche 16 eine axiale Verlagerung der Scharnierachse 5 unterbinden. Mit dem Festschrauben des die Lagergabel 6 bildenden Scharnierteils 3 an der Stirnseite des Brillenteils 2, was bei abgewinkeltem Federscharnier ohne Schwierigkeiten möglich ist, ist die Montage des Federscharniers zwischen Bügel und Bügelbacken abgeschlossen. Durch die lösbare Verbindung zwischen dem die Lagergabel 6 bildenden Scharnierteil 4 und dem zugehörigen Brillenteil 2 kann das Federscharnier im Nachhinein wieder zerlegt werden. Zu diesem Zweck ist lediglich der Scharnierteil 4 nach einem Lösen der Schrauben 17 aus der Aufnahmetasche 16 zu entnehmen, sodass die Scharnierachse 5 entfernt werden kann, wonach das Federscharnier in die beiden Scharnierteile zerfällt.

## Patentansprüche

1. Federscharnier zwischen einem Bügelbacken und einem Bügel einer Brille mit zwei je einem dieser Brillenteile (1, 2)zugehörigen Scharnierteilen (3, 4), von denen einer eine Lagergabel (6) mit einer Scharnierachse (5) zur Aufnahme des anderen Scharnierteils (3) formt, der mit Hilfe eines Gleitstücks (7) in einem Gehäuse (9) verschiebbar geführt ist, und mit einer zwischen zwei Schenkeln (12) des Gleitstücks (7) angeordneten Schraubenfeder (13), die sich einerseits an einem die beiden Schenkel (12) verbindenden Steg (14) des Gleitstücks (7) und anderseits an einem gehäusefesten Widerlager abstützt, **dadurch gekennzeichnet, dass** das Gehäuse (9) ein eine Aufnahmeöffnung (8) des zugehörigen Brillenteils (1) für das Gleitstück (7) verschließendes Verschlussstück darstellt, das das Widerlager für die Schraubenfeder (13) bildet und mit einem an der Stirnseite des zugehörigen Brillenteils (1) anschraubbaren Anschlussflansch (10) versehen ist.

2. Federscharnier nach Anspruch 1, **dadurch gekennzeichnet, dass** der die Lagergabel (6) bildende Scharnierteil (4) einen in eine seitlich geschlossene Aufnahmetasche (16) des zugehörigen Brillenteils (2) eingreifenden Einsatz bildet.

3. Federscharnier nach Anspruch 1 oder 2, **dadurch gekennzeichnet, dass** das Gleitstück (7) des federbeaufschlagten Scharnierteils (3) einen die Schraubenfeder (13) aufnehmenden Rahmen bildet.

## Claims

1. Spring hinge between a temple bracket and a temple of spectacles having two hinge parts (3, 4) associated with one of these spectacles parts (1, 2) respectively, one of which hinge parts forms a bearing fork (6) with a hinge spindle (5) to receive the other hinge part (3) which is guided in a displaceable manner with the aid of a slide piece (7) in a housing (9), and having a helical spring (13) which is disposed between two limbs (12) of the slide piece (7) and is supported on the one hand on a web (14) of the slide piece (7) connecting the two limbs (12) and on the other hand on a counter-bearing fixed to the housing, **characterised in that** the housing (9) constitutes a closure piece closing a reception orifice (8) of the associated spectacles part (1) for the slide piece (7), which closure piece forms the counter-bearing for the helical spring (13) and is provided with an attachment flange (10) which can be screwed to the end face of the associated spectacles part (1).

2. Spring hinge as claimed in claim 1, **characterised in that** the hinge part (4) forming the bearing fork (6) forms an insert engaging into a laterally-closed reception pocket (16) of the associated spectacles part (2).

3. Spring hinge as claimed in claim 1 or 2, **characterised in that** the slide piece (7) of the spring-loaded hinge part (3) forms a frame receiving the helical spring (13).

## Revendications

1. Charnière à ressort entre un tenon et un cintre de lunettes avec deux parties de charnière (3, 4) associées respectivement à une de ces parties de lunettes (1, 2), dont une forme une fourchette de palier (6), avec un axe de charnière (5) pour loger l'autre partie de charnière (3) qui est guidée dans un boîtier (9) de façon coulissante à l'aide d'une pièce coulissante (7), et avec un ressort hélicoïdal (13) disposé entre deux membres (12) de la pièce coulissante (7) qui s'appuie, d'une part, au niveau d'une entretoise (14), reliant les deux membres (12), de la pièce coulissante (7) et, d'autre part, au niveau d'un contre-palier fixé au boîtier, **caractérisée en ce que** le boîtier (9) constitue une pièce d'obturation obturant une ouverture de réception (8) de la partie de lunettes (1) associée, pour la pièce coulissante (7), qui forme le contre-palier pour le ressort hélicoïdal (13) et est munie d'une bride de raccordement (10) pouvant être vissée au niveau du côté face de la partie de lunettes (1) associée.

2. Charnière à ressort selon la revendication 1, **caractérisée en ce que** la partie de charnière (4) formant la fourchette de palier (6) forme un insert s'encastrant dans un logement de réception (16), latéralement fermé, de la partie de lunettes (2) associée.

3. Charnière à ressort selon la revendication 1 ou 2, **caractérisée en ce que** la pièce coulissante (7) de la partie de charnière (3) sollicitée par ressort forme un cadre logeant le ressort hélicoïdal (13).
